# EUROPEAN PATENT SPECIFICATION

(11) **EP 2 140 787 B1**
(45) Date of publication and mention of the grant of the patent: **22.07.2015**
(21) Application number: 08159316.2
(22) Date of filing: 30.06.2008
(51) Int. Cl.: A47J 31/36, A47J 31/44

(54) **Capsule transport cart for a beverage production device**
Kapseltransportwagen für ein Getränkeherstellungsgerät
Chariot de transport de capsules pour dispositif de production de boissons

(43) Date of publication of application: 06.01.2010
(73) Proprietor: Nestec S.A., 1800 Vevey (CH)
(72) Inventor: Schaible, Renato, CH-9403 Goldach SG (CH); Stieger, Mische, CH-9422 Staad SG (CH); Martin, Vincent, CH-1023 Crissier (CH); Epars, Yann, CH-1305 Penthalaz (CH)
(74) Representative: Rupp, Christian

(56) References cited:
- EP-A- 1 219 216
- EP-A- 1 486 150
- FR-A- 2 873 011

## Description

### Background of the invention

The present invention relates to a device for providing a ready-to-drink nutritional composition, such as e.g. an infant formula, coffee tea, based on ingredients contained in a closed capsule.

In capsule-based beverage production machines, such as those disclosed in EP 1 216 216 A, EP 1 486 150 A, and FR 2 873 011, a sealed capsule is inserted into the machine and has to be placed manually or via a mechanism to a beverage production chamber having means to open the capsule at an inlet side and at an outlet side. The beverage production chamber furthermore is provided with means for feeding a liquid, which can be e.g. optionally heated and/or pressurized water, through the opened inlet side of the capsule in order to have the liquid interact with the ingredients. The beverage or liquid comestible, being the result of the interaction, can then be obtained from the capsule.

Usually the means for opening or perforating the inlet side of the capsule are designed as at least one piercing member, which carries out a relative movement vis-a-vis the capsule in order to open the inlet side of the capsule.

The invention now seeks a solution in order to have an automated mechanism for transporting such capsule from an insert position, where the capsule is placed by a user, to the beverage production chamber and for opening the inlet side of the capsule.

### Object and Summary of the Invention

In a first aspect, the present invention relates to a device for preparing a nutritional composition from a substance contained in a capsule, according to claim 1

With a device according to the present invention, it is possible to enable an interaction between water supplied by the liquid supply of the device and ingredients contained in the capsule. Note that the term "liquid supply" encompasses also any water supply line of the device which is connectable to an external (e.g. tap water) or reserve of water foreign to the device itself.

The device preferably comprises a pump which is connected to the liquid supply in order to supply liquid such as water to the injection member of the device. Hence, liquid under pressure can be provided to the injection member and thus to the capsule when the injection member is interacting with the capsule. Thereby, the injection member is preferably at least one piercing element such as a needle or the like, suitable for piercing a face of the capsule.

In a preferred embodiment the capsule is a capsule containing ingredients for the preparation of a nutritional composition. The capsule is received by supporting means of the capsule transport cart. Said capsule is preferably a single-use capsule which contains a portion of a nutritional composition to be hydrated (e.g. diluted, dispersed and/or infused with water). Thus, water provided to the capsule can be used to reconstitute the nutritional composition. The capsule preferably comprises a water injection face and a delivery face.

In possible modes of "direct-flow" gastight capsules, preferably, as described in European patent EP 1 472 156 B1, or also eventually in other modes such as in international patent application WO 2007/131559, a pressure is typically built up within the capsule during water injection, which causes a lower face (or septum) of the capsule to open thence, enabling the output of the liquid to be prepared. Since the output of the beverage to be prepared takes place at the lower face of the capsule with no contact with opening means of the device, the flow of the liquid can be directly poured into the receptacle, e.g. a baby bottle, without contaminating the surfaces of the device. This results in a very hygienic preparation and delivery of the nutritional preparation.

After the injection of water into the capsule, the pouring from the capsule may be delayed in order to provide sufficient time for interaction of the water and the ingredients, e.g., to obtain complete dissolution of the ingredient in water. For the pouring of the beverage to be prepared from the capsule, opening means such as reliefs which may be arranged against a delivery tearable foil in order to tear the membrane in a controlled manner. These opening means interact with the foil in response to the pressure rise within the capsule when injecting water. The nutritional composition to be prepared can then flow directly from a dedicated outlet of the capsule into the receptacle without contacting the device.

EP 1 472 156 B1 discloses various suitable capsule configurations that may be used in the device of the present invention.

Thereby, the use of a new single-use capsule for the preparation of a nutritional serving coupled with the specific "direct flow" features of the capsule, i.e., including an inside pressure-responsive opening technology within the capsule and draining the liquid directly from the capsule into a receiving vessel such as an infant's bottle both greatly facilitates the preparation of the nutritional product and make it significantly safer with substantially reduced or even eliminated risk of contamination.

This is particularly advantageous if the apparatus is to be used in a hospital nursery where infant formulas must be prepared not only for healthy infants but also for infants suffering from specific diseases, deficiencies or severe allergies, for example allergies to cows' milk.

In order to insert the capsule into the supporting means of the capsule transport cart, the device preferably comprises an aperture in a housing of the device for inserting said capsule. As the capsule cart is moveable within the device, the capsule may only be inserted into the device, when the capsule transport cart is in a capsule insertion position. Therefore, a cover member such as a lid or a faceplate may be provided to cover the aperture when the capsule transport cart is not in its capsule insertion position. The cover member may be in mechanical connection to the capsule transport cart such that the aperture in the housing of the device is opened or closed respectively by said cover member, dependent on the position of the capsule transport cart. However, the cover member may as well be actuated by a corresponding sensor or the like which is configured to determine the position of the capsule cart within the device.

The said capsule insertion position of the capsule transport cart is preferably a position at which the transport cart is located directly beneath the aperture for inserting the capsule. Accordingly, in this position, a capsule can be provided by a user to the capsule supporting means of the capsule transport cart. Thereby, the capsule supporting means are enclosing the capsule such that the capsule is held at a fixed position relative to the capsule cart. The supporting means are preferably at least two supporting members which are moveable with respect to each other.

The capsule transport cart is mounted within the device by means of a guiding system. Therefore, the capsule transport cart interacts with guiding means of said guiding system in order to guide the movement of the capsule cart within the device and hence, enable the capsule transport cart to assume a number of predefined positions within the device. Thereby, the guiding means preferably comprise two opposite planes which are arranged in parallel to the dedicated movement of the transport cart within the device. The planes are preferably disposed at two opposite endings within the housing of the device in order to enable a correct and stable guidance and positioning of the capsule transport cart within the device. Said planes may as well be integrally formed within the housing of the device.

In a preferred embodiment, the guiding means comprise grooves and/or recesses. The grooves and/or recesses are preferably formed within these opposite planes. Moreover, the grooves and/or recesses are of a predefined thickness and depth and are configured to interact with positioning means provided at the capsule transport cart which are of complementary form. The positioning means are preferably bosses or cylinders protruding from the capsule transport cart to an equal extent. Thereby, the cylindrical elements or bosses are at least partially positioned within the grooves and/or recesses such that the capsule transport cart is effectively mounted between the two opposite faces. Accordingly, the interaction between the guiding means and the capsule cart enables a stable guidance of the movement of the transport cart within the device. Moreover, a predefined motion of the capsule transport cart within the device is enabled.

Preferably, the guiding means and the positioning means are made from plastics, e.g. PA6.6 or GF40, such that the frictional forces between the guiding means and the positioning means are reduced to a minimum extent.

The injection member is preferably mounted at a fixed position within the device such that a predefined relative motion between the injection member and the capsule transport cart is enabled by said guiding system.

To enable a movement of the capsule transport cart and thus of the capsule within the device, the transport cart is connected to drive means. The drive means is a linear actuator which enables a linear movement thereof. Moreover, the movement of the linear actuator is preferably horizontal within the device. Thereby, the linear movement of the actuator is preferably restricted to a predefined distance along a linear axis within the device by means of two limit switches. Hence, when the linear actuator reaches on of its end positions, the limit switches stop the movement of the actuator. The linear actuator is preferably driven by an electric motor.

The drive means and the capsule cart are pivotallyconnected by connection members which enable the actuator to exert a force onto the capsule transport cart. Preferably, there are at least two connection members pivotally connected to the capsule cart and the linear actuator. In a preferred embodiment, four connection members are provided, wherein two connection members are connected to each side of the capsule transport cart. Accordingly, a driving force of the linear actuator may effectively be transmitted to the capsule transport cart by means of the connection members.

In a preferred embodiment, the guiding means preferably comprise a horizontal and a vertical section which are connected to each other. Thus, the guiding means preferably comprise horizontal and vertical grooves and/or ridges connected to each other. Thereby, the linear actuator of the drive means is preferably arranged parallel to the horizontal section of the guiding means. Hence, when the positioning means of the capsule cart interact with the horizontal section of the guiding means, the force exerted on the capsule transport cart by the linear actuator or more particular, the force exerted onto the capsule transport cart by means of the connection members which connect the linear actuator and the capsule transport cart results in a horizontal movement of the capsule cart. However, at the position, where the horizontal section of the guiding means is connected to the vertical section of the guiding means, a continuous linear movement of the linear actuator is transformed into a vertical movement of the capsule transport cart. Hence, the interaction of the capsule cart and the guiding means of the device result in a

transformation of the continuous linear movement of the linear actuator into a horizontal and into a vertical movement of the capsule transport cart and thus of the capsule supported by the supporting means thereof.

This is particularly enabled by the connection members which transmit the driving force from the linear actuator to the capsule cart. As the connection members are pivotally connected to the actuator and the capsule cart, the transformation of the linear movement of the actuator into a horizontal and vertical movement of the transport cart is based on a parallelogram.

Due to the described arrangement, a capsule enclosed by the supporting means of the capsule transport cart can effectively be moved horizontally within the device from a first capsule insertion position to a second position underneath the injection member. Moreover, as the continuous linear movement of the actuator is transformed into a vertical movement of the capsule transport cart, the capsule can effectively be approached vis-a-vis the injection member and hence can be brought into a capsule injection position at which the fixed injection member interacts with the capsule, e.g. pierces a face of the capsule. Accordingly, the movement of the capsule with respect to the fixed injection member pierces the capsule. Hence, liquid supplied by the liquid supply of the device can be injected into the capsule and thus, the liquid can effectively interact with the ingredients provided within the capsule in order to prepare a nutritional composition. Accordingly, an automatic and hygienic supply of the capsule to the injection member is obtained.

Moreover, due to the fixed position of the injection member, a relative movement between the injection member and the capsule is obtained by the moving transport cart only. Hence, the fluid circuit and the injection member can be facilitated as no moving injection member and no moving supply tubes have to be provided within the device.

The linear actuator is preferably arranged such that the linear continuous movement of the actuator is parallel to the horizontal section of the guiding means. Accordingly, the movement of the actuator is preferably perpendicular to the vertical section of the guiding means.

It should be noted that the horizontal section and vertical section of the guiding means do not necessary have to be exact parallel to the horizontal and vertical axis of the device. Instead, the terms "horizontal" and "vertical" section of the guiding means encompass as well guiding means which are arranged at a certain deviation angle with respect to the horizontal and vertical axis of the device.

In a preferred embodiment, the guiding system further comprises capsule release means for interacting with the supporting means of the capsule transport cart such that the capsule enclosed by said supporting means can be released at a predefined position of the capsule transport cart in the device. Thereby, the support means of the capsule are moved relatively to each other in order to release the capsule.

Due to the release of the capsule, the capsule is dropped into a capsule collecting tray or the like of the device.

The capsule release means are preferably arranged at the opposite planes of the guiding system. Moreover, the capsule release means are configured such that the capsule is released when the capsule transport cart is moved from its injection position to the capsule insertion position thereof. The capsule release means are configured to release the capsule only in one direction of movement of the capsule cart with respect to the injection element. Thus, the capsule is not released when the capsule cart is moved from its capsule insertion position to the injection position thereof.

In a preferred embodiment, during a horizontal movement of the transport cart, the supporting members holding the capsule are distanced from each other by being moved over a wedge shaped element such that the capsule is released and will fall downwards.

In a preferred embodiment the device further comprises filter means for filtering the liquid prior to the injection of the liquid into the capsule. Preferably, the filter means comprise at least one antimicrobial filter membrane. Thereby, the antimicrobial filter membrane means a filter that is designed to filter pathogens or undesired microorganisms such as bacteria, virus, yeast and/or mould or other microparticles, from water to be filtered. The antimicrobial filter membrane may have a nominal pore size of 0.45 microns or less. By use of such a filter, the risk of contamination of the nutritional composition to be prepared can be significantly minimized.

The filter means are preferably disposed in a water flow-path between the liquid supply of the device and the injection member.

The filter means are preferably configured to be inserted to or removed from the device. Hence, a used filter can be exchanged by a new filter according to user's instructions or in response, for example, to an alerting signal, such as a led flashing on the device or an indication on an LCD screen. These indications can be triggered when a specific number of servings have been provided, when a specific volume of water has been run through the filter or even after a certain time has been elapsed. Alternatively, the filter can be recycled, for example, by carrying out a proper thermal processing of the filter out of the dispenser, e.g., sterilization, according to user's instructions. Thus, the filter means can be removed effortlessly after a certain pre-defined time for exchange or recycling in order to ensure proper water filtering conditions in the device ensuring a safe water supply to the device. However, the filter may as well be sterilized within the machine by a provided steam generator of the device.

Preferably, a filter release mechanism is provided which encloses said filter means in order to enable a stable connection of the filter means and the water flow-path between the liquid supply and the injection member. The filter release mechanism preferably has an open and a closed position. Thus, when being in its open position, the filter can be effectively removed from the device. When being in its closed position, the filter is connected to the water flow-path of the device in a water-tight manner.

The capsule transport cart preferably comprises means for mechanically interacting with the described filter release mechanism in order to bring the filter release mechanism from its closed position into the open position thereof and vice versa. Thereby, the capsule cart preferably assumes a filter release position within the device. Accordingly, the interaction between the capsule cart and the filter release mechanism is configured such that the filter release mechanism is in its open state when the capsule cart is brought into said filter release position. When the capsule transport cart is in its injection position and during any movement of the capsule transport cart within the device, the filter release mechanism is preferably in its closed position due to the mechanical interaction between the capsule cart and the filter release mechanism. Accordingly, it is possible to enable automatic enclosing and releasing of the filter of the device.

In a preferred embodiment, the device further comprises a pump which is in connection to the injection member and the liquid supply of the device. Hence, liquid under pressure can be injected into the capsule when the injection member is in connection with the capsule provided by the capsule transport cart.

Moreover, the device may be provided with means to regulate the amount and/or temperature of water to be dispensed into the capsule so that it stops the flow of water when a preselected or automatically controlled quantity has been dispensed. Water regulation means may comprise a water pump, and a control unit of the device comprising programs, a capsule recognition system between the capsule and device, e.g., barcodes on the capsule and the like, for properly controlling the physical conditions of water delivered in respect to the type of capsule.

The device may further be provided with purging means to empty the capsule from residual liquid, for example, by flushing the liquid in the capsule with a gas. Purge means also reduce the risk of contamination by a back-flow of the nutritional composition into the device. A suitable gas is compressed air at a pressure of between 200 mbar and 2 bar, for example 300 mbar which can be pressurized by an air compressor in the device.

The device may further comprise a steam generator connected to the water flowpath in order to sanitize the filter and other surfaces of contact with water such as the tubings, the injection member and the capsule supporting means of the capsule transport cart. Therefore, the filter, the injection member, the tubings and the supporting means of the capsule are manufactured and assembled in such a manner to resist steaming, up to, for example, 120 °C. The device is preferably cleaned before and after each serving, i.e. steam is blown through the injection member before and after each serving.

In a preferred embodiment, a connection element is provided which can be selectively brought into connection to the liquid injection member for connecting the injection member to a drip tray of the device.

Thereby, the connection element is in fluid communication with the drip tray of the device. Hence, during sanitizing the injecting member, e.g. by actively blowing steam through the injecting member, such steam or liquid can be recovered by means of the connection element and can then be guided to the drip tray.

The connection element is preferably connected to the injection member in a water-tight manner. Accordingly, the injection member and the tubings of the device can be effectively sanitized without any leaking liquid.

Preferably, the connection element is connected to the transport cart of the device and is configured such that a connection between the injection member and the drip tray is established in a predefined position of the capsule transport cart within the device.

In a preferred embodiment, the connection element is brought into connection with the injection member when the capsule cart is in its capsule insertion position. To connect and detach the connection element to the injection member, the connection element is pivotally connected to the capsule cart. Hence, when the capsule cart is horizontally moved within the device, the connection element is moved into an inclined position such that the horizontal movement of the capsule cart detaches the connection element from the injection member.

The connection element preferably is of tube-like shape with a funnel-shaped inside. Hence, when the connection element is brought into an inclined position due to the movement of the transport cart, damaging of the injection member can be effectively prevented.

In a second aspect, the invention proposes a method for preparing a nutritional composition from a substance contained in a capsule, according to claim 13

The nutritional composition to be prepared by the device according to the present invention may be any composition which by nature is very sensitive to contamination by pathogens. Examples of preferred nutritional compositions for use in the method of the present invention are infant formulas, growing up milks and liquid infant cereals. The ingredients of the composition are not critical to the method of the present invention and other food powder or liquid concentrate may be used. Examples of different types of infant formula that may be used in the method of the present invention include whey protein dominant formulas, formulas containing a mixture of whey and casein, formulas based on other proteins such as soy, formulas in which the protein component is partially or extensively hydrolyzed etc. The nutritional composition is preferably stored in a gastight single-use capsule provided to the chamber, in powder form or concentrated liquid form.

A ready-to-drink nutritional composition may also be prepared according to the method of the present invention using more than one capsule to prepare a single serving. This permits a degree of flexibility in the compositions that is prepared. For example, a range of capsules containing different supplements may be manufactured and consumers may be provided with instructions as to how to combine these to prepare a personalized composition suited to the particular needs of the recipient.

### Brief description of the drawings

Further features, advantages and objects of the present invention will become apparent for the skilled person when reading the following detailed description of embodiments of the present invention, when taking in conjunction with the figures of the enclosed drawings.
- Fig. 1: shows a schematic drawing of a preferred embodiment of the device according to the present invention for preparing the nutritional composition.
- Fig. 2a - 2d: show a preferred embodiment of the device according to the present invention in sectional side view, wherein the capsule transport cart is shown in different positions with regard to the guiding system of the device.
- Fig. 3: shows a perspective side view of the capsule transport cart and the capsule release mechanism of the device.
- Fig. 4: shows a perspective side view of a preferred embodiment of the capsule cart supported by guiding means and connected to filter release means.
- Fig. 5: shows a diagram of preferred positions the transport cart can assume while being supported by the guiding means.

### Detailed description of embodiments

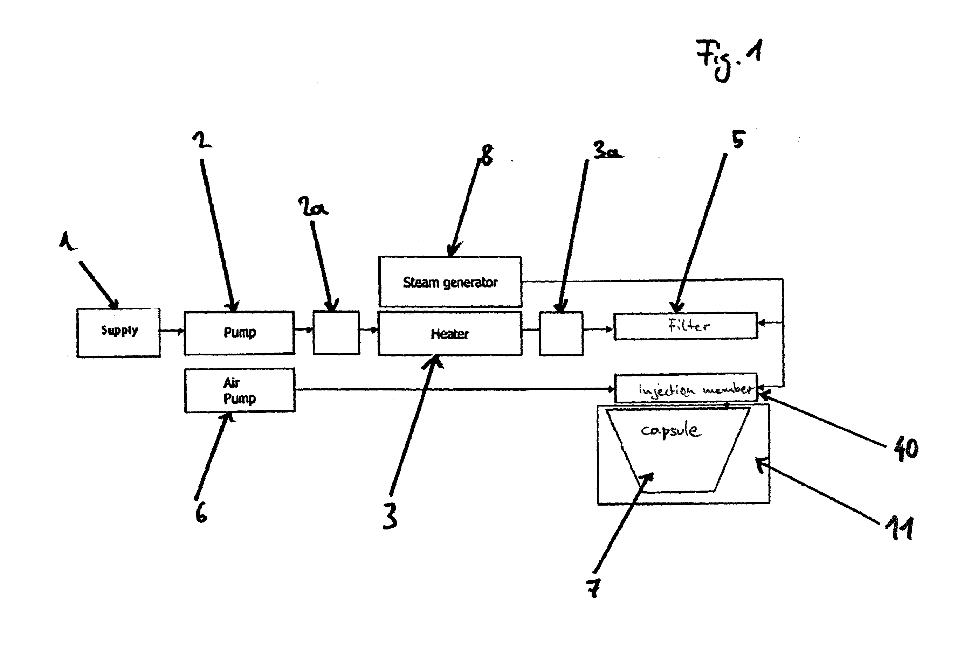

Figure 1 shows a schematic drawing of a preferred embodiment of a device according to the present invention. The device comprises a water supply 1 connected to a water pump 2. The output of the pump is connected to a heater 3 which preferably comprises a coiled stainless-steel pipe in a die cast aluminium thermo-block (not shown). Power is supplied to the thermo-block sufficient to heat the water to the desired temperature as it passes though the pipe. The output of the heater is connected to a filter 5 which is connected to the injection member 40 of the device. In a injection position of the capsule transport cart 10 (not shown in figure 1), the injection member 40 is connected to a capsule 7 which is housed by supporting means 11 of the capsule transport cart 10.

The term "capsule" refers, in the general concept of the invention, to a single-use package such as a cartridge, pod or sachet of various packaging materials containing nutritional ingredients.

The term "pump" means any technical means that can transport a liquid at a sufficient positive pressure from the water supply 1 to the injection member 40. This means can be a pressure pump such as a piston pump, a diaphragm pump, a peristaltic pump, a gear pump, a centrifugal pump, a progressive cavity pump, a hand pump and the like. Furthermore, flow control means 2a are provided preferably between the pump 2 and the heater 3 of the device. Moreover, temperature control means 3a are provided preferably between the heater 3 and the injection member 40. Hence, the temperature and the flow of a liquid within the device can be controlled and adjusted.

In addition, an air pump 6 is connected to injection member 40 in order to enable the flushing of any residua within a capsule 7 into a receptacle 50 disposed beneath the capsule 7.

The capsule 7 which is shown only schematically contains approximately 10ml of ingredients. The ingredients are preferably provided in a powdered or in a liquid concentrated form within the capsule 7. The preparation of a 100-ml single serving of a nutritional beverage such as infant formula with the device according to the present invention will now be described.

The capsule 7 is located in the capsule supporting means 11 of the capsule transport cart 10 such that the injection member 40 punctures a membrane sealing the capsule 7. Flow control means 2a and temperature control means 3a are set such that a desired quantity of water at the desired temperature is provided to the capsule. Thereby, water is preferably pumped at a pressure of about 0.2 bar from a water tank 1 (or a water supply line from outside) to the heater 3 where it is heated to a preferred temperature between 25 and 40°C. The heated water is then passed through the filter 5 to the injection member 40 at a preferred pressure between 2 and 7 bars and dispensed from there into the capsule 7 which contains a unit dose of a nutritional composition such as an infant formula. When the pressure in capsule 7 reaches a predetermined value which is preferably 2,5 bars, the capsule opens and the reconstituted infant formula is dispensed directly from the capsule into a suitable receptacle such as a baby bottle (not shown). The air pump 6 is then operated to flush any remaining liquid out of the capsule and into the receptacle.

In addition, a steam generator 8 is connected to the injection member 40 and to the filter 5. In operation, the injection member 40 and the filter 5 may be sterilised as often as desired by passing steam from the steam generator through the injection member 40 and the filter 5.

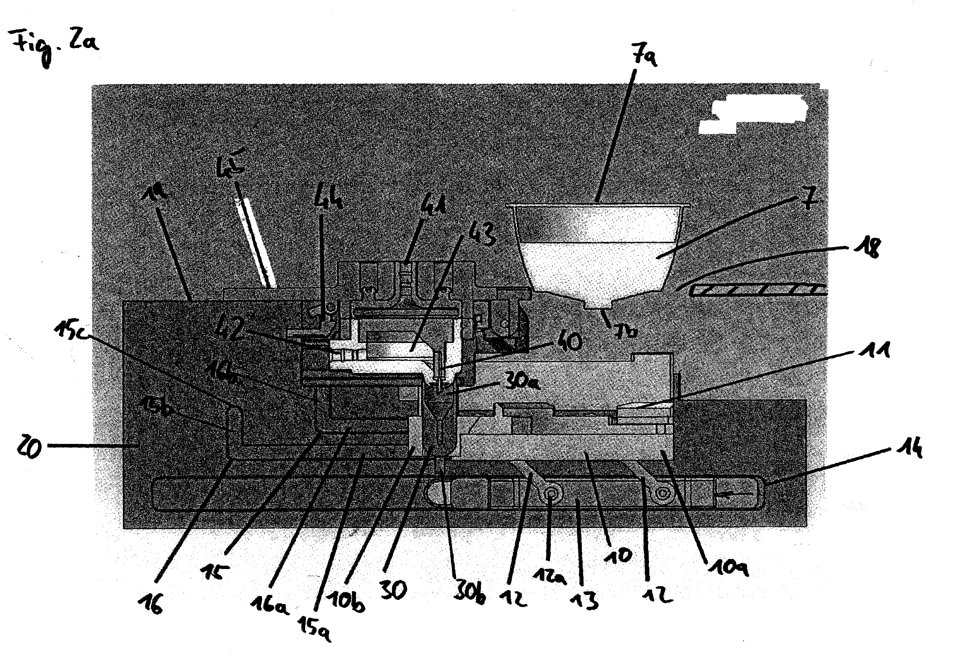

Figure 2a shows a sectional side view of the capsule transport cart 10 within the device, wherein the transport cart is in its capsule insertion position. Thereby, the capsule transport cart 10 is preferably positioned beneath an aperture 18 preferably formed in a top surface 19 of the device. The aperture may be of any shape suitable for providing a capsule 7 to the interior of the device and thus to the transport cart 10. The aperture may be covered with a cover member or a lid (not shown). Thereby, the cover member may be mechanically connected to the capsule transport cart 10 such that a movement of the cart enables an opening or closing of the aperture by a relative movement of the cover member.

The device further comprises an injection assembly 45. This injection assembly 45 comprises an injection member 40, a liquid inlet 41, a steam inlet 42, a steam chamber 43 and a locking mechanism 44. The injection member 40 is connected to the liquid inlet 41 which is preferably a tubing or pipe being connected to the liquid supply 1 of the device. Hence, liquid can be supplied from the liquid supply 1 to the injection member 40. Moreover, the injection member 40 is connected to the steam inlet 42 by means of a steam chamber 43. The steam inlet 42 is connected to the steam generator 8 of the device. Moreover, the steam inlet 42 is preferably also connected to the air pump 6 of the device. Accordingly, steam and/or air can be provided to the injection member 40 which can thus be effectively sanitized.

The locking mechanism 44 of the injection assembly 45 enables a user to connect or detach the injection assembly 45 to the device. Therefore, the top surface 19 of the device preferably comprises an aperture 21 for providing the injection assembly 45 to the device. The aperture 21 may be of any shape. The injection assembly 45 which is of complementary shape to the aperture 21 thus may be placed within said aperture. Hence, the maintenance of the device is facilitated as an operator may easily access injection assembly 45 in order to replace the injection member 40 for example. Thereby, the locking mechanism 44 may be a latch member or the like suitable for connecting the injection assembly 45 to the device.

During operation of the device, the injection assembly 45 and thus the injection member 40 are preferably held at a fixed position within the device.

The capsule transport cart 10 comprises a base member 10a and supporting means 11 for housing a capsule 7 provided to the capsule transport cart. The supporting means 11 are designed to receive a capsule 7 which is provided to the device by means of the aperture 18. Hence, in the shown capsule insertion position of the capsule transport cart 10, a user may dispose a capsule 7 through the aperture 18 which then falls down into the supporting means 11 of the capsule transport cart 10. The supporting means 11 preferably comprise two enclosing members which may be moved relatively to each other in order to enclose or release a capsule 7. Preferably, both of the enclosing members are pivotally connected to the base member 10a of the capsule transport cart 10.

The capsule cart 10 furthermore comprises a mounting member 10b to which a connection element 30 is pivotally connected. The connection element 30 is in fluid connection to a drip tray (not shown) of the device. The connection element 30 is preferably of tube-like form and comprises an outlet 30b which is connected to the drip tray of the device. The inlet 30a of the tube-like connection element 30 is funnel-shaped such that it can receive the injection member 40 as shown in the figure. Hence, preferably in the capsule insertion position of the capsule transport cart 10, the connection element 30 is connected to the injection member 40 in a water-tight manner. In another preferred embodiment, the capsule transport cart 10 may assume a dedicated sterilizing position within the device in which the connection element 30 can be selectively connected to the injection member 40. It is thus possible to sanitize the injection assembly 45 and in particular the injection element 40 by means of the steam generator 8 connected to the injection assembly 45.

As can be seen in figure 2a, the connection element 30 is aligned with the injection member 40. However, when moving the capsule transport cart 10 from its capsule insertion position or a dedicated sterilizing position into another position within the device, the connection element 30 is brought into an inclined position relative to the position where the connection element 30 is aligned with the injection member 40. Thereby, the specific shape of the interior enables to connect and to detach the connection element 30 to the injection member 40 when the capsule cart is moved horizontally within the device without damaging the injection member 40.

Hence, every time a cleaning action via steam is to be carried out, the capsule transport cart 10 and thus the connection element 30 to which the drip tray is connected can be moved to the capsule insertion position or a dedicated sterilizing position of the transport cart 10 in order to bring the connection element 30 in close contact to the injection member 40.

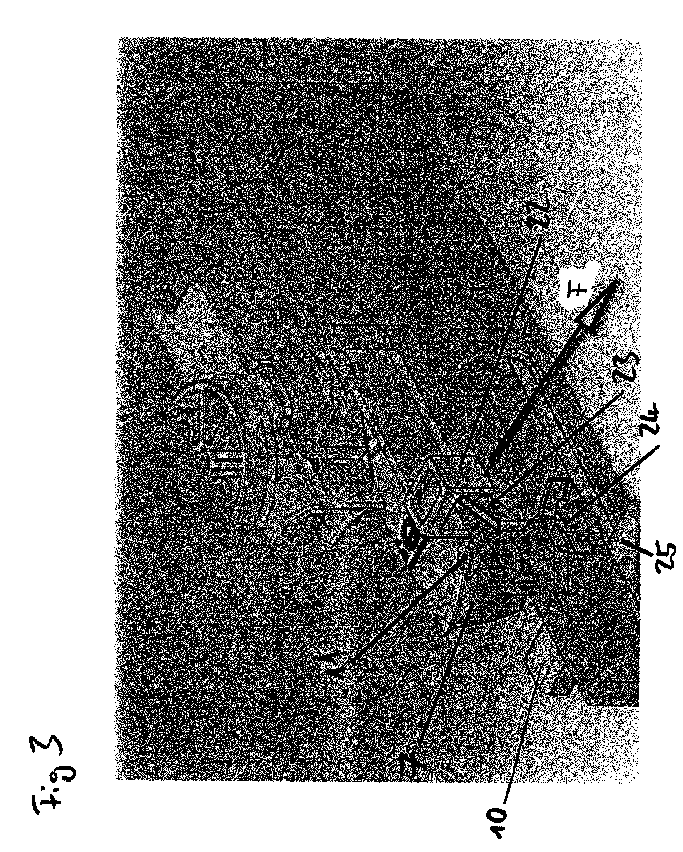

The device further comprises a guiding system comprising two opposite planes 20 in order to support the capsule transport cart 10 and guide the movement thereof within the device. The planes 20 are preferably arranged parallel to each other. Moreover, the opposite planes 20 are preferably arranged at opposing sides within the device in order to provide a stable support for the capsule transport cart 10. The planes 20 are preferably connected to the side walls of a housing (not shown) of the device. The planes 20 may as well be an integral part of the side walls of a housing of the device. The guiding system further comprises guiding means 15, 16 for actively guiding the movement of the capsule transport cart 10 within the device. The guiding means preferably comprise a horizontal section 15a,16a and a vertical section 15b,16b. The horizontal section and the vertical section are connected to each other. The guiding means are preferably grooves and/or recesses suitable for interacting with positioning means 25 (see figure 3) provided at the capsule transport cart 10. Thereby, the grooves and/or recesses are preferably of a predefined equal thickness and depth. The positioning means 25 of the capsule transport cart are preferably bosses or cylinders protruding from the capsule transport cart to an equal extent. Thereby, the bosses or cylinders are preferably protruding from a side face of the capsule transport cart 10 being opposite to the planes 20 in which the guiding means 15,16 are formed. The positioning means 25 are preferably at least partially inserted into the grooves and/or recesses of the guiding means such that a movement of the capsule transport cart 10 can effectively be guided by the guiding means 15,16. Hence, the movement of the transport cart 10 is parallel to the guiding planes 20 within the device.

The guiding means comprise end positions 15c,16c which limit the movement of the capsule transport cart 10 within the device.

To enable a movement of the capsule transport cart 10 driving means 13 are provided. The driving means 13 preferably comprise a linear actuator which is preferably driven by an electric motor. The linear actuator is preferably arranged in parallel to the horizontal section 15a,16a of the guiding means. The driving force of the linear actuator is transmitted to the capsule transport cart 10 by means of connection members 12. These connection members 12 are preferably pivotally connected to the actuator 13 and the transport cart 10 by means of joints 12a provided at the actuator 13 and the transport cart 10. The drive means 13 preferably comprise two limit switches (not shown) which restrict the linear movement of the actuator to a predefined distance along a linear axis within the device. Accordingly, when the linear actuator reaches on of its end positions, the limit switches stop the movement of the actuator.

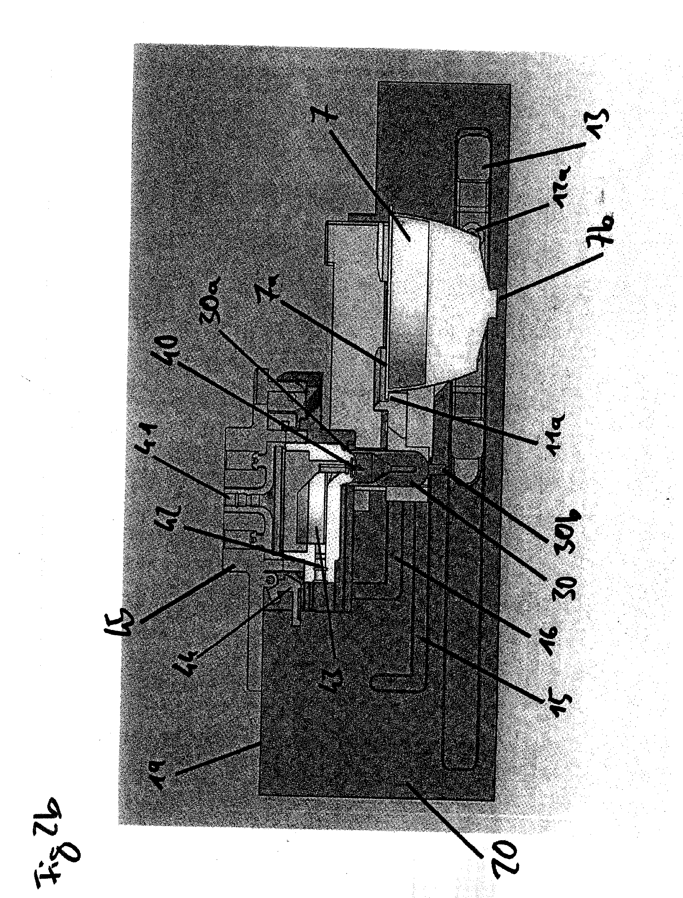

Figure 2b corresponds to figure 2a in which the capsule transport cart 10 is still in its capsule insertion position. As can be seen from figure 2b, the capsule 7 is received by the supporting means 11 provided at the capsule transport cart 10. Thereby, a circumferential projection at an upper face 7a of the capsule 7 interacts with a protruding circumferential edge 11a of the supporting means 11. Hence, the capsule 7 can effectively be supported by the supporting means 11 during movement of the capsule transport cart 10.

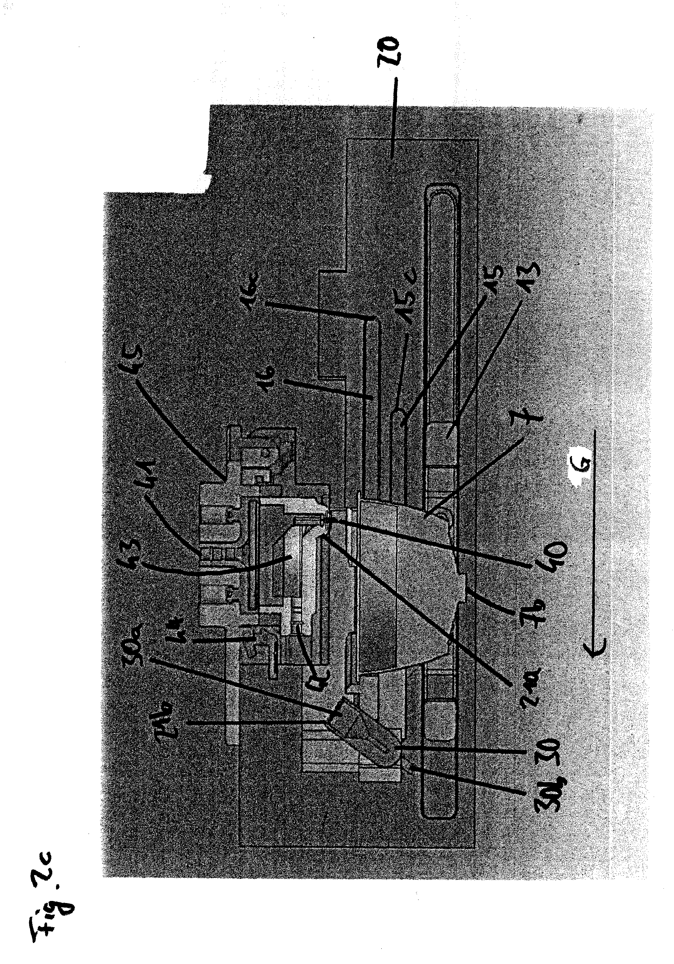

Figure 2c corresponds to figure 2b in which the capsule transport cart 10 and hence the capsule 7 has been horizontally moved from a capsule insertion position to a second position underneath the injection member 40 as indicated by arrow G. Thereby, the linear movement of the actuator 13 is transmitted by the connection members 12 to the capsule transport cart 10. As the capsule transport cart 10 is interacting with the horizontal section 15a,16a of the guiding means 15,16, the linear horizontal movement of the actuator results in a horizontal movement of the capsule transport cart 10.

As can be seen from the figure, due to the horizontal movement of the capsule transport cart 10, the connection element 30 is moved into an inclined position. This prevents the damage of the injection member 40 when the connection element 30 is moved horizontally beneath it.

The shown inclined position is due to an interaction of the connection member 30 and a protrusion 21a which is surrounding the injection member 40. The said protrusion 21a is preferably semicircular shaped and has a radius which is complementary formed to an inner edge 21b of the inlet 30a of the connection member 30. Hence, when the inclined connection member 30 and the injection member 40 are approached, the protrusion 21a interacts with the inner edge 21b such that the connection element 30 and the injection member 40 are brought into an aligned position. Accordingly, when the connection member 30 and the injection element 40 are separated due to a horizontal movement of the capsule transport cart 10, the connection element 30 is brought into an inclined position due to the interaction of the protrusion 21a and its inner edge 21b. Thereby, the movement of the connection member 30 is enabled as it is pivotally connected to the capsule transport cart 10.

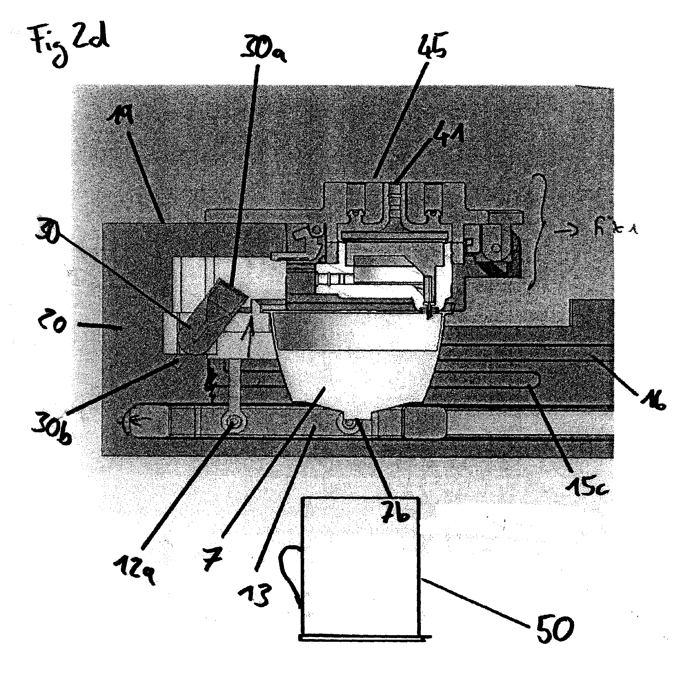

Figure 2d corresponds to figure 2c in which the capsule transport cart 10 and thus the capsule 7 have been moved vertically in order to approach the injection member 40. This corresponds to the capsule injection position of the capsule transport cart 10. Hence, as shown in figure 2d, the capsule 7 is made to interact with the injection member 40 due to the movement of the capsule transport cart 10. Thereby, the injection member 40 preferably pierces an upper face 7a of the capsule to inject liquid such as water supplied by the liquid supply. The liquid injected into the capsule 7 may then interact with the ingredients provided within the capsule in order to form a nutritional composition. An outlet 7b of the capsule 7b may then be opened due to the internal pressure rise in the capsule. Accordingly, the nutritional composition to be prepared is poured through the outlet 7b into a receptacle 50. The receptacle 50 may be a baby bottle, a cup or any other vessel suitable for receiving the prepared nutritional composition.

The vertical movement of the capsule transport cart 10 and thus of the capsule 7 is obtained by a continuous linear movement of the linear actuator 13. This is achieved due to the interaction of the capsule transport cart and the vertical section 15b,16b of the guiding means. Hence, at the position, where the horizontal section 15a,16a of the guiding means is connected to the vertical section 15b,16b of the guiding means, a continuous linear movement of the linear actuator is transformed into a vertical movement of the capsule transport cart.

Thereby, the connection members 12 which transmit the driving force of the drive means 13 to the capsule transport cart 10 enable the transformation of the continuous horizontal movement of drive means 13 to a vertical movement of the capsule transport cart 10. Since connection members 12 are pivotally connected to the drive means 13 and to the capsule transport cart 10, the transformation of the linear movement of the actuator into a horizontal and vertical movement of the transport cart is based on a parallelogram.

In the shown capsule injection position of the transport cart 10, the length of the connection members 12 is preferably chosen such that in the end position of the linear actuator 13, i.e. in the position where the movement of the actuator is stopped by means of a limit switch 14, the capsule 7 is placed at a predefined position suitable for interacting with the injection member 40.

The liquid injection into the capsule is preferably triggered automatically by the position of the capsule transport cart 10. Therefore, the position of the drive means 13 may be encoded and thus can be fed to a control unit. The pump 2, the heating means 3, the steam generator 8 and the air pump 6 of the device may be operated by said control unit dependent on the position of the drive means 13 and hence dependent on the position of the capsule transport cart 10 within the device.

After the preparation of the nutritional composition, the drive means 13 enable a movement of the capsule transport cart 10 from its capsule injection position to its capsule insertion position or another position of the transport cart 10. Hence, due to the vertical section 15b,16b of the guiding means, the capsule transport cart 10 is moved vertically by the linear motion of the drive means 13. At the position, where the vertical section 15b,16b is connected to the horizontal section 15a,16b of the guiding means, the continuous linear movement of the drive means 13 is then transformed into a horizontal movement of the capsule transport cart 10.

As shown in figure 3, the guiding means further comprise capsule release means 23. The release means 23 are preferably interacting with the supporting means 11 of the capsule transport cart 10 during its horizontal movement. Thereby, the release means 23 is preferably a wedge-shaped member 23 pivotally mounted within the device by means of a rod 24. The supporting means 11 comprise a bracket-like member 22 which, in horizontal movement of the capsule transport cart 10, interacts with the wedge-shaped member 23. The bracket-like member 22 is arranged in parallel to the direction of motion of the capsule transport cart 10. The wedge-shaped member 23 is arranged with in the device such that when the capsule transport cart 10 is moved from its injection position to its capsule insertion position, the bracket-like member 22 is guided into a direction preferably perpendicular to the motion of the capsule transport cart 10 within the device (indicated by arrow F). This is due to the wedge-shaped member 23 being arranged at a predefined angle with respect to the direction of motion of the capsule transport cart 10. As the capsule transport cart 10 is continuously moved horizontally in the device, the bracket-like member 22 is completely moved along the wedge-shaped member 23 and thus, the supporting means 11 are more and more separated. Hence, a capsule 7 supported by said supporting means 11 can be effectively released by said release means 23. According to the described embodiment, the capsule cart 10 can assume a capsule ejection position within the device in order to enable a release of the capsule 7.

It should be noted that the capsule release means 23 are designed to release the capsule 7 only in one direction of motion of the capsule transport cart 10. Thus, the capsule 7 is only released when the capsule transport cart 10 is moved from its injection position to its capsule insertion position. However, when the capsule transport cart 10 is moved in the other direction, the bracket-like member 22 is not guided by said wedge-shaped member 23. By contrast, during a horizontal motion of the capsule transport cart 10 from its capsule insertion position to its capsule injection position, the wedge-shaped member 23 displaces the bracket-like member 22 as the bracket-like member is pivotally connected to the device by means of the rod 24.

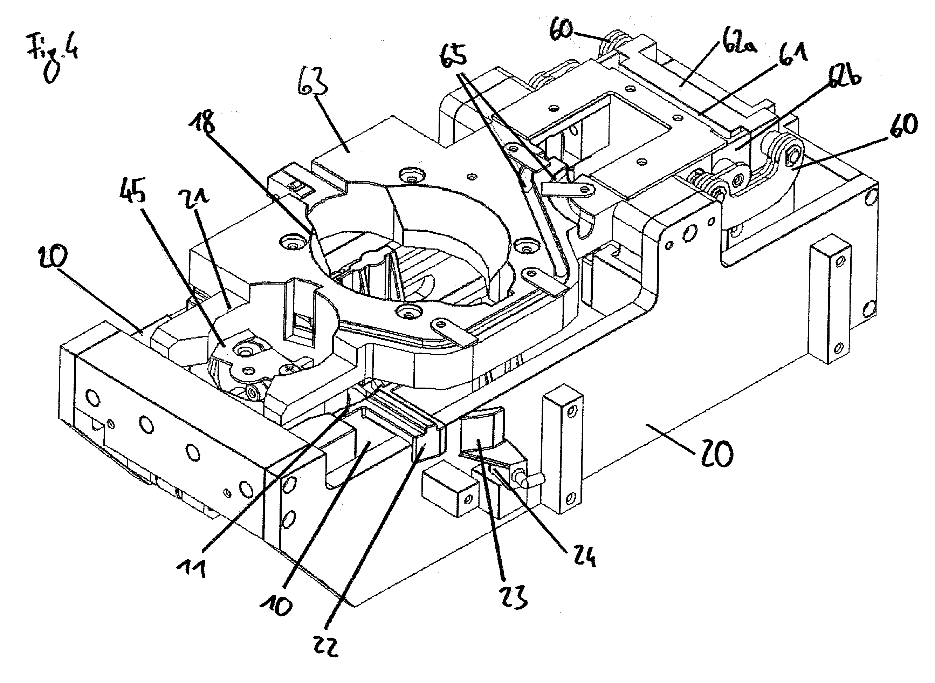

Fig. 4 shows a perspective side view of a preferred embodiment of the capsule cart 10 supported by guiding means 15,16 and connected to filter release means 60.

As can be seen in figure 4, the filter release means 60 are connected to filter enclosing means 62a,62b which enclose an aperture 61 in which a filter (not shown) may be inserted. Thereby, said release means 60 are preferably two hinged joints disposed at two opposite side portions of the enclosing means 62a,62b.

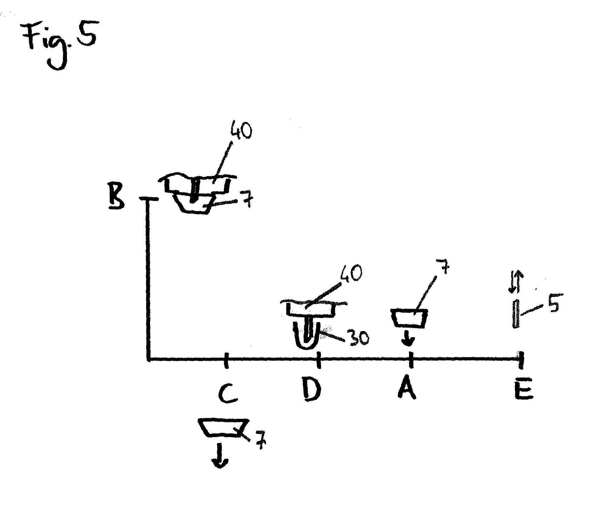

If the transport cart 10 is brought into a position in which an interaction between the transport cart 10 and the filter release means 60 is enabled (position E in figure 5), the filter release means 60 are brought into an open state, thereby separating the two adjacent enclosing means 62a,62b such that a filter (not shown) which is enclosed by the enclosing means 62a,62b can be released.

The shown arrangement in figure 4 relates to the closed position of the release means 60, in which the enclosing means 62a,62b are pressed together by the hinged joints 60 in order to enclose a dedicated filter.

As can be further seen in figure 4, an upper surface 63 of the device comprises guiding grooves 65 for housing tube members such that the filter 5 can be effectively connected to injection member 40 and liquid supply 1 of the device.

Figure 5 shows a diagram of preferred positions the transport cart 10 can assume while being supported by the guiding means. The diagram in figure 5 corresponds to a side view of the guiding means 15,16, whereby the positions A,C,D and E can preferably be assumed by means of a horizontal movement of the transport cart 10 and the position B is preferably assumed after a vertical movement of the transport cart 10.

As shown in the figure, the transport cart 10 can preferably be brought into a first capsule insertion position A in which a capsule can be supplied to the supporting means 11 of the capsule cart 10.

Moreover, the capsule cart 10 can be brought into a capsule injection position B in which a preparation of the beverage takes place.

Position E relates to a filter change position in which the capsule cart 10 is interacting with provided filter release means 60 (see figure 4) in order to enable an exchange of the provided filter means 5 of the device. Preferably, the filter release means 60 are activated when the capsule cart 10 is brought into an end position with respect to the guiding means 15,16, i.e. filter change position E is preferably not an intermediate position within the device. According to this, the filter release means 60 and thus the filter means 5 of the device may be arranged at a certain distance to the injection member 40. Thus, complexity of the device can be reduced and maintenance properties are enhanced.

Preferably, the filter means 5 can be connected and disconnected to the device when the transport cart 10 is in its filter change position E in which it interacts with the filter release means 60. When the transport cart 10 is brought from its filter change position E into another position, it interacts with the filter release means 60 such that filter means 5 are stably connected to the device and thus, cannot be removed any more.

Furthermore, the capsule cart 10 can assume a capsule ejection position C in which the used capsule 7 can be released from the support means 11. Preferably, said capsule ejection position C can only be assumed by the capsule cart 10 when moving from position B to any of shown positions A, D, or E.

Position D as shown in figure 5 denotes a sterilizing position of the capsule cart 10 in which the connection element 30 connected to the capsule cart 10 is connected to the injection member 40 for sterilizing purposes as already described. It should be noted that positions A and D, i.e. capsule insertion to the transport cart 10 and sterilizing of the injection member 40, can either be two separate positions as indicated in figure 5 or can be combined to constitute the same position of the capsule cart 10 within the device as shown in figures 2a and 2b.

In a preparation cycle of a nutritional composition to be prepared by the device the transport cart 10 assumes at least positions A, for inserting a capsule 7 to the cart 10, B, for injecting a liquid into the capsule 7, C for ejecting the used capsule 7 from the cart 10, and position D for sterilizing the injection member 40.

Accordingly, sanitizing by steaming is automatically carried out after each preparation cycle when the connection element 30 is automatically connected to the injection member 40. Hence, the device remains clean and safe after each preparation cycle.

Moreover, due to the ejection of the capsule 7 after each preparation of a nutritional composition which is obtained due to the interaction of the injection member 40 and the capsule 7 in the capsule injection position B, it is obtained that the capsule does not stay in contact with the injection member 40 or is left inside the device for a longer time. Hence, contamination and growth of microorganisms can be avoided.

The filter release or filter change position E is preferably assumed by the capsule cart 10 only on demand. This means that the position E is preferably not assumed by the capsule cart 10 at each preparation cycle of the device as the filter means 5 in general do not have to be changed after each preparation cycle. Preferably, a given number of preparations or a given time may be set by the control means of the device such that the transport cart 10 automatically assumes the filter change position E after having carried out the set numbers of preparations or after the set time has been elapsed.

According to the described embodiment, it is a main advantage of the present invention that different operations can be carried out as a result of the motion of the transport cart 10 within the device. Accordingly, capsule insertion, preparation, capsule ejection, steaming and a necessary filter change are be triggered by the capsule cart 10 being positioned at corresponding key positions A to E within the device.

Another important aspect of the invention is that the capsule transport cart 10 is multifunctional, i.e. it is not only displacing horizontally and vertically the capsule 7, but also enables a connection between the injection member 40 and the drip tray of the device. Moreover, it may be mechanically connected to the blocking/release of a filter of the device. In addition, the capsule transport cart 10 is able to automatically release a used capsule 7 by means of the capsule release means which are mechanically connected to the capsule transport cart 10. Thereby, all the functions are enabled by drive means 13 which are connected to the capsule cart 10.

Although the present invention has been described with reference to preferred embodiments thereof, many modifications and alternations may be made by a person having ordinary skill in the art without departing from the scope of this invention which is defined by the appended claims.

## Claims

1. A device for preparing a nutritional composition from a substance contained in a capsule (7), comprising
a capsule transport cart (10) which comprises supporting means (11) for said capsule,
guiding means (15,16) in the device interacting with the transport cart (10) in order guide the movement thereof,
a liquid injection member (40) being in fluid connection with a liquid supply (1),
wherein the capsule transport cart (10) and the guiding means (15,16) are designed such that the capsule (7) is transported horizontally under the liquid injection member (40) followed by a relative vertical approaching movement of the capsule (7) vis-a-vis the injection member (40),
wherein a linear actuator (13) is connected to the capsule transport cart (10) in order to enable a movement thereof,
wherein the linear actuator (13) and the capsule transport cart (10) are connected by means of connection members (12) pivotally connected to the linear actuator (13) and the capsule transport cart (10),
**characterized in that**
the connection members (12) transform a continuous linear movement of the linear actuator (13) into a horizontal and into a vertical movement of the capsule transport cart (10) due to the interaction of the transport cart (10) and the guiding means (15,16) of the device.

2. A device according to claim 1,
wherein the transformation of the linear movement of the linear actuator (13) into a horizontal and vertical movement of the transport cart (10) is based on a parallelogram.

3. A device according to any of the preceding claims,
wherein the guiding means (15,16) are grooves of a predefined thickness and depth interacting with positioning means (25) provided at the capsule transport cart (10) which are of complementary form.

4. A device according to claim 3,
wherein positioning means (25) are bosses or cylinders protruding from the capsule transport cart (10) to an equal extent.

5. A device according to any of the preceding claims,
wherein the injection member (40) is mounted at a fixed position within the device.

6. A device according to any of the preceding claims,
wherein the injection member (40) is a piercing element such as a needle element or the like, suitable for piercing at least one face of the capsule (7).

7. A device according to any of the preceding claims,
wherein the guiding means (15,16) further comprises capsule release means (23) for interacting with the supporting means (11) of the capsule transport cart (10) such that the capsule (7) enclosed by said supporting means (11) can be released at a predefined position (C) of the capsule transport cart (10) in the device.

8. A device according to any of the preceding claims,
wherein the capsule transport cart (10) further comprises means for mechanically interacting with a filter release mechanism (60) of the device which encloses a filter (5) being in connection to the liquid supply (1) and the injection member (40) and suitable for filtering liquid which is provided by the liquid supply (1).

9. A device according to any of the preceding claims,
wherein the device further comprises a pump (2) being in connection to the injection member (40) and the liquid supply (1) of the device such that liquid under pressure can be injected into the capsule (7) in at least one position (B) of the capsule transport cart (10).

10. A device according to any of the preceding claims,
wherein a connection element (30) is provided which can be selectively brought into connection to the liquid injection member (40) for connecting the injection member (40) to a drip tray of the device.

11. A device according to claim 10,
wherein the connection element (30) is connected to the transport cart (10) of the device and is configured such that a connection between the injection member (40) and the drip tray is established in a predefined position (D) of the capsule transport cart (10) within the device.

12. A method for preparing a nutritional composition from a substance contained in a capsule (7), the device comprising an injection member (40) connected to a liquid supply (1) and a capsule transport cart (10) which comprises capsule supporting means (11) for receiving the capsule (7) inserted into an aperture (18) of the device, the method comprising the steps of
transporting the capsule (7) horizontally under the liquid injection member (40) by means of a linear actuator (13) connected to the capsule cart (10), and
transferring the horizontal movement of the capsule (7) into a vertical approaching movement of the capsule vis-a-vis the injection member (40),
**characterized in that**
a continuous linear movement of the linear actuator (13) is transformed into the horizontal and into the vertical movement of the capsule transport cart (10).

## Patentansprüche

1. Vorrichtung zur Zubereitung einer Nahrungszusammensetzung aus einer in einer Kapsel (7) enthaltenen Substanz, mit
einem Kapseltransportwagen (10), der Abstützeinrichtungen (11) für die Kapsel umfasst,
Führungseinrichtungen (15, 16) in der Vorrichtung, welche mit dem Transportwagen (10) zusammenwirken, um dessen Bewegung zu führen,
einem Flüssigkeitseinspritzteil (40), das in Fließverbindung mit einer Flüssigkeitszufuhr (1) steht,
wobei der Kapseltransportwagen (10) und die Führungseinrichtungen (15,16) so ausgeführt sind, dass die Kapsel (7) waagerecht unter dem Flüssigkeitseinspritzteil (40) transportiert wird, worauf eine relative vertikale Annäherungsbewegung der Kapsel (7) gegenüber dem Einspritzteil (40) folgt,
wobei ein lineares Stellglied (13) mit dem Kapseltransportwagen (10) verbunden ist, um dessen Bewegung zu ermöglichen,
wobei das lineare Stellglied (13) und der Kapseltransportwagen (10) über Verbindungsteile (12) verbunden sind, welche schwenkbar mit dem linearen Stellglied (13) und dem Kapseltransportwagen (10) verbunden sind,
**dadurch gekennzeichnet, dass** die Verbindungsteile (12) aufgrund des Zusammenwirkens des Transportwagens (10) und der Führungseinrichtungen (15, 16) der Vorrichtung eine kontinuierliche lineare Bewegung des linearen Stellglieds (13) in eine horizontale sowie in eine vertikale Bewegung des Kapseltransportwagens (10) umwandeln.

2. Vorrichtung gemäß Anspruch 1, wobei die Umwandlung der linearen Bewegung des linearen Stellglieds (13) in eine horizontale und vertikale Bewegung des Transportwagens (10) auf einem Parallelogramm beruht.

3. Vorrichtung gemäß einem der vorhergehenden Ansprüche, wobei die Führungseinrichtungen (15,16) aus Nuten mit vorgegebener Dicke und Tiefe bestehen, welche mit an dem Kapseltransportwagen (10) vorgesehenen Positioniereinrichtungen (25) zusammenwirken, die eine komplementäre Form aufweisen.

4. Vorrichtung gemäß Anspruch 3, wobei die Positioniereinrichtungen (25) gleichermaßen aus dem Kapseltransportwagen (10) vorstehende Naben oder Zylinder darstellen.

5. Vorrichtung gemäß einem der vorhergehenden Ansprüche, wobei das Einspritzteil (40) an einer feststehenden Position innerhalb der Vorrichtung angebracht ist.

6. Vorrichtung gemäß einem der vorhergehenden Ansprüche, wobei das Einspritzteil (40) ein Durchstoßelement wie z.B. ein Nadelelement oder dergleichen ist, das zum Durchstoßen von mindestens einer Fläche der Kapsel (7) geeignet ist.

7. Vorrichtung gemäß einem der vorhergehenden Ansprüche, wobei die Führungseinrichtung (15, 16) weiterhin eine Kapselfreigabeeinrichtung (23) zum Zusammenwirken mit der Abstützeinrichtung (11) des Kapseltransportwagens (10) derart umfasst, dass die von der Abstützeinrichtung (11) umschlossene Kapsel (7) in einer vorgegebenen Stellung (C) des Kapseltransportwagens (10) in der Vorrichtung freigegeben werden kann.

8. Vorrichtung gemäß einem der vorhergehenden Ansprüche, wobei der Kapseltransportwagen (10) weiterhin eine Einrichtung zum mechanischen Zusammenwirken mit einem Filterfreigabemechanismus (60) der Vorrichtung umfasst, der einen Filter (5) umschließt, welcher in Verbindung mit der Flüssigkeitszufuhr (1) und dem Einspritzteil (40) steht und zum Filtern von über die Flüssigkeitszufuhr (1) bereitgestellter Flüssigkeit geeignet ist.

9. Vorrichtung gemäß einem der vorhergehenden Ansprüche, wobei die Vorrichtung weiterhin eine Pumpe (2) umfasst, die mit dem Einspritzteil (40) und der Flüssigkeitszufuhr (1) der Vorrichtung derart in Verbindung steht, dass Flüssigkeit unter Druck in mindestens einer Stellung (B) des Kapseltransportwagens (10) in die Kapsel (7) eingespritzt werden kann.

10. Vorrichtung gemäß einem der vorhergehenden Ansprüche, wobei ein Verbindungselement (30) vorgesehen ist, das wahlweise mit dem Flüssigkeitseinspritzteil (40) in Verbindung gebracht werden kann, um das Einspritzteil (40) mit einer Tropfschale der Vorrichtung zu verbinden.

11. Vorrichtung gemäß Anspruch 10, wobei das Verbindungselement (30) mit dem Transportwagen (10) der Vorrichtung verbunden ist und derart ausgelegt ist, dass eine Verbindung zwischen dem Einspritzteil (40) und der Tropfschale in einer vorgegebenen Stellung (D) des Kapseltransportwagens (10) innerhalb der Vorrichtung hergestellt wird.

12. Verfahren zur Zubereitung einer Nahrungszusammensetzung aus einer in einer Kapsel (7) enthaltenen Substanz, wobei die Vorrichtung ein mit einer Flüssigkeitszufuhr (1) verbundenes Einspritzteil (40) und einen Kapseltransportwagen (10) umfasst, der eine Kapselabstützeinrichtung (11) zur Aufnahme der in eine Öffnung (18) der Vorrichtung eingesetzte Kapsel (7) aufweist, wobei das Verfahren die folgenden Schritte umfasst:
Transportieren der Kapsel (7) waagerecht unter dem Flüssigkeitseinspritzteil (40) mithilfe eines mit dem Kapselwagen (10) verbundenen, linearen Stellglieds (13), und
Übertragen der horizontalen Bewegung der Kapsel (7) in eine vertikale Annäherungsbewegung der Kapsel gegenüber dem Einspritzteil (40),
**dadurch gekennzeichnet, dass** eine kontinuierliche lineare Bewegung des linearen Stellglieds (13) in die horizontale und in die vertikale Bewegung des Kapseltransportwagens (10) umgewandelt wird.

## Revendications

1. Dispositif pour préparer une composition nutritionnelle à partir d'une substance contenue dans une capsule (7), comprenant
un chariot de transport de capsule (10) qui comprend des moyens de support (11) pour ladite capsule,
des moyens de guidage (15, 16) dans le dispositif interagissant avec le chariot de transport (10) afin de guider le mouvement de celui-ci,
un organe d'injection de liquide (40) étant en liaison fluidique avec une alimentation en liquide (1),
dans lequel le chariot de transport de capsule (10) et les moyens de guidage (15, 16) sont conçus de telle sorte que la capsule (7) est transportée horizontalement sous l'organe d'injection de liquide (40) suivi d'un mouvement d'approche vertical relatif de la capsule (7) vis-à-vis de l'organe d'injection (40),
dans lequel un actionneur linéaire (13) est relié au chariot de transport de capsule (10) afin de permettre un mouvement de celui-ci,
dans lequel l'actionneur linéaire (13) et le chariot de transport de capsule (10) sont reliés au moyen d'organes de liaison (12) reliés de manière pivotante à l'actionneur linéaire (13) et au chariot de transport de capsule (10),
**caractérisé en ce que** les organes de liaison (12) transforment un mouvement linéaire continu de l'actionneur linéaire (13) en un mouvement horizontal et en un mouvement vertical du chariot de transport de capsule (10) en raison de l'interaction du chariot de transport (10) et des moyens de guidage (15, 16) du dispositif.

2. Dispositif selon la revendication 1,
dans lequel la transformation du mouvement linéaire de l'actionneur linéaire (13) en un mouvement horizontal et vertical du chariot de transport (10) est basée sur un parallélogramme.

3. Dispositif selon l'une quelconque des revendications précédentes,
dans lequel les moyens de guidage (15, 16) sont des rainures d'une épaisseur et profondeur prédéfinies interagissant avec des moyens de positionnement (25) ménagés sur le chariot de transport de capsule (10) qui sont de forme complémentaire.

4. Dispositif selon la revendication 3,
dans lequel les moyens de positionnement (25) sont des bossages ou cylindres faisant saillie du chariot de transport de capsule (10) dans une même mesure.

5. Dispositif selon l'une quelconque des revendications précédentes,
dans lequel l'organe d'injection (40) est monté en une position fixe à l'intérieur du dispositif.

6. Dispositif selon l'une quelconque des revendications précédentes,
dans lequel l'organe d'injection (40) est un organe de perçage comme par exemple un organe formant aiguille ou un organe similaire, adapté pour percer au moins une face de la capsule (7).

7. Dispositif selon l'une quelconque des revendications précédentes,
dans lequel les moyens de guidage (15, 16) comprennent en outre des moyens de libération de capsule (23) pour interagir avec les moyens de support (11) du chariot de transport de capsule (10) de sorte que la capsule (7) entourée par lesdits moyens de support (11) peut être libérée en une position prédéfinie (C) du chariot de transport de capsule (10) dans le dispositif.

8. Dispositif selon l'une quelconque des revendications précédentes,
dans lequel le chariot de transport de capsule (10) comprend en outre des moyens pour interagir mécaniquement avec un mécanisme de libération de filtre (60) du dispositif qui entoure un filtre (5) étant en liaison avec l'alimentation en liquide (1) et l'organe d'injection (40) et adapté pour filtrer du liquide qui est fourni par l'alimentation en liquide (1).

9. Dispositif selon l'une quelconque des revendications précédentes,
dans lequel le dispositif comprend en outre une pompe (2) qui est en liaison avec l'organe d'injection (40) et l'alimentation en liquide (1) du dispositif de telle sorte que du liquide sous pression peut être injecté dans la capsule (7) dans au moins une position (B) du chariot de transport de capsule (10).

10. Dispositif selon l'une quelconque des revendications précédentes,
dans lequel un organe de liaison (30) est prévu, lequel peut être sélectivement mis en liaison avec l'organe d'injection de liquide (40) pour relier l'organe d'injection (40) à un bac d'égouttement du dispositif.

11. Dispositif selon la revendication 10,
dans lequel l'organe de liaison (30) est relié au chariot de transport (10) du dispositif et est configuré de telle sorte qu'une liaison entre l'organe d'injection (40) et le bac d'égouttement est établie dans une position prédéfinie (D) du chariot de transport de capsule (10) dans le dispositif.

12. Procédé pour préparer une composition nutritionnelle à partir d'une substance contenue dans une capsule (7), le dispositif comprenant un organe d'injection (40) relié à une alimentation en liquide (1) et un chariot de transport de capsule (10) qui comprend des moyens de support de capsule (11) pour recevoir la capsule (7) insérée dans une ouverture (18) du dispositif, le procédé comprenant les étapes consistant à
transporter la capsule (7) horizontalement sous l'organe d'injection de liquide (40) au moyen d'un actionneur linéaire (13) relié au chariot de capsule (10), et
transférer le mouvement horizontal de la capsule (7) en un mouvement d'approche vertical de la capsule vis-à-vis de l'organe d'injection (40),
**caractérisé en ce qu'**un mouvement linéaire continu de l'actionneur linéaire (13) est transformé en ledit mouvement horizontal et en ledit mouvement vertical du chariot de transport de capsule (10).
